Europäisches Patentamt

European Patent Office

Office européen des brevets

(11) Veröffentlichungsnummer: **0 107 789**
**A2**

(12) **EUROPÄISCHE PATENTANMELDUNG**

(21) Anmeldenummer: 83109561.7

(22) Anmeldetag: 26.09.83

(51) Int. Cl.³: **G 06 K 9/46**

(30) Priorität: 30.09.82 DE 3236336

(43) Veröffentlichungstag der Anmeldung:
09.05.84 Patentblatt 84/19

(84) Benannte Vertragsstaaten:
AT CH DE FR GB IT LI

(71) Anmelder: SIEMENS AKTIENGESELLSCHAFT
Berlin und München Wittelsbacherplatz 2
D-8000 München 2(DE)

(72) Erfinder: Scherl, Wolfgang, Dipl.-Ing.
Kafkastrasse 54
D-8000 München 83(DE)

(72) Erfinder: Wöhrl, Rudolf
Lindberghstrasse 7
D-8070 Ingolstadt(DE)

(54) Verfahren zur Darstellung von Druckvorlagen in Form von grössen- und drehlagenunabhängigen Bogenstrukturen zum Zwecke einer Dokumentenanalyse, insbesondere zur Schriftzeichenerkennung.

�具 Bei einem Verfahren zur Darstellung von Druckvorlagen in Form von größen- und drehlagenunabhängigen Bogenstrukturen zum Zwecke einer Dokumentenanalyse, insbesondere zur Schriftzeichenerkennung wird das betreffende Dokument unter mehreren Projektionsrichtungen abgetastet. Aus den Abtastergebnissen werden sog. Deskriptoren für unterschiedliche Grundmustertypen abgeleitet, die dann einem jeweils bereits teilweise abgetasteten Rand eines Symbols in der Vorlage zugeordnet werden. Die so entstehenden Bogenstrukturen werden nach ihrer Fertigstellung in einen weiterverarbeitenden Prozeß eingeleitet.

./...

EP 0 107 789 A2

FIG 1

0107789

SIEMENS AKTIENGESELLSCHAFT          Unser Zeichen
Berlin und München                  VPA
                                     82 P 1 9 3 0 E

Verfahren zur Darstellung von Druckvorlagen in Form von
größen- und drehlagenunabhängigen Bogenstrukturen zum
Zwecke einer Dokumentenanalyse, insbesondere zur Schriftzeichenerkennung

Die vorliegende Erfindung bezieht sich auf ein Verfahren
zur Darstellung von Druckvorlagen in Form von größen- und
drehlagenunabhängigen Bogenstrukturen zum Zwecke einer
Dokumentenanalyse, insbesondere zur Schriftzeichenerkennung, wobei das Dokument außer Textbereichen auch Graphik-
und/oder Bildbereiche enthalten kann, bei dem die Vorlage
optoelektronisch, vorzugsweise mittels einer Videokamera,
Abtastzeile für Abtastzeile abgetastet wird, wonach die
in analoger Form entstehenden, die optoelektronische Abbildung der Vorlage repräsentierenden Signale mittels
eines Entscheidungsvorgangs jeweils entweder einer einen
"Weißwert" repräsentierenden Binärzahl, vorzugsweise
"1", oder einer einen "Schwarzwert" repräsentierenden Binärzahl, vorzugsweise "0", zugeordnet werden und wonach
die Ergebnisse einer derartigen Schwellwert entscheidung jeweils für
zwei aufeinanderfolgende Abtastzeilen zu ihrer Verarbeitung zwischengespeichert werden.

Der vorliegenden Erfindung liegt die Aufgabe zugrunde,
ein Verfahren anzugeben, durch das der bildhafte Inhalt
einer Vorlage drehlagen-unabhängig und größenunabhängig
abgetastet und analysiert werden kann. Außerdem soll aufgabengemäß das Verfahren erlauben, eine Vorlage in einem
einzigen Durchlauf und ohne Rückschritte in dem Verfahrensablauf zu bearbeiten. Aufgabengemäß soll das Verfahren
außerdem derart beschaffen sein, daß kein vollständiger
Bildspeicher zur Abspeicherung des gesamten Bildinhaltes
erforderlich ist.

VPA 82 P 1930 E

Die der Erfindung zugrundeliegende Aufgabe wird durch ein Verfahren nach dem Oberbegriff des Patentanspruchs 1 gelöst, das dadurch gekennzeichnet ist, daß jeweils die Daten einer aktuellen und der unmittelbar vorhergehenden Abtastzeile zwischengespeichert werden, daß beim Abtasten einer neuen Zeile ein Vorwärtsrollen für die beiden jeweils zwischengespeicherten Abtastzeilen vorgenommen wird, daß aus den zwischengespeicherten "zweizeiligen Bildsignal" Mustergrundtypen nach ihrer Art und nach ihrer Lage bestimmt werden, daß den bestimmten Bedeutungen wie "Oberkante", "Unterkante", "Sattel", "Verzweigung" und "Flanke", zugeordnet werden, daß diese Bedeutungen codiert und entsprechend ihrer Lage in einen eindimensionalen Vektor, der genau die Länge einer Bildzeile hat, projiziert werden, wobei die Projektion aus der Richtung der Vertikalen auf die Bildhorizontale, nämlich der Ebene der momentan abgetasteten Bildzeile, erfolgt, wobei aus dieser Projektion Bedeutungen bereits abgetasteter Mustergrundtypen sowie deren Lage in Richtung der X-Koordinate erkennbar sind, daß die jeweils zugehörigen Y-Koordinaten in einer Zusatzzeile gespeichert werden, daß eine Projektion aus der Richtung einer Bilddiagonalen erfolgt, wonach wiederum den Mustergrundtypen mit Hilfe zumindest einer bereits bestehenden Projektion Bedeutungen zugeordnet werden, wozu diese Bedeutungen ebenfalls codiert und entsprechend ihrer Lage in einen eindimensionalen Vektor projiziert werden, dessen Länge wiederum der Bildzeile entspricht, wobei aus dieser Projektion die Bedeutungen bereits abgetasteter Mustergrundtypen sowie deren Lage in X-Richtung entsprechend der Diagonalprojektion erkennbar sind und wobei die jeweils zugehörigen Y-Koordinaten sowie die momentane Projektionslänge einer Codierungsart in einer Zusatzzeile abgespeichert sind, daß aus den Mustergrundtypen, den Vertikal- und Diagonalprojektionen tangentiale Punkte oder "Deskriptoren" ermittelt werden, die als Stützwerte die Musterränder beschreiben, nämlich an den Stellen, an denen Tangenten mit Normalen in 45°-, 90°-, 135°-

0107789

und 180°-Richtung angelegt werden können, daß den Deskriptoren, um deren jeweilige Zugehörigkeit zu einer Fläche darzustellen, eine Flächennummer des jeweiligen Objekts zugewiesen wird, daß den Deskriptoren zusätzlich an dem linken bzw. dem rechten Rand einer Fläche, welche Ränder mit fortlaufenden Nummern gekennzeichnet werden, entsprechende Randnummer zugewiesen wird, daß die Deskriptoren mit Hilfe der Randnummern zu konkaven bzw. konvexen Bögen zusammengefaßt werden und daß die zu einem jeweils vollständig durch seine Deskriptoren beschriebenen Bogen gehörende Information dem Speicher entnommen und einen weiteren, abschließenden Verarbeitungsprozeß zugeführt wird.

Die Erfindung bietet den Vorteil, daß eine Abtastvorlage drehlagenunabhängig und größenunabhängig abgetastet werden kann. Außerdem ist vorteilhaft, daß kein Bildspeicher für die gesamte Vorlage, sondern jeweils nur für zwei Zeilen, nämlich zwei Abtastzeilen, erforderlich ist. Das Verfahren erlaubt außerdem vorteilhafterweise, daß eine Vorlage in einem einzigen Durchlauf ohne Rückschritte in dem Verfahrensablauf bearbeitet werden kann. Die nach dem erfindungsgemäßen Verfahren ermittelten Bogenstrukturen werden zur Zerlegung der Vorlage in Text-, Graphik- und/oder Bildbereiche, zur Graphikanalyse, zur Schriftarterkennung und zur Schriftzeichenerkennung weiterverwendet.

Eine vorteilhafte Weiterbildung der Erfindung sieht vor, daß sechzehn unterschiedliche Diskriptorarten extrahiert werden. Vorteilhafterweise ist außerdem vorgesehen, daß der jeweils erste Diskriptor eines neuen Bogens einen Neueintrag in zumindest eine von Kopflisten in einem Bogenspeicher bewirkt. Jeder Diskriptor wird entsprechend der ihm zugeordneten Randnummer dem zugehörigen Bogen zugeordnet und entsprechend abgespeichert.

Eine vorteilhafte Weiterbildung der Erfindung sieht vor, daß für den Fall, daß mehrere Bogenfragmente zu einem Bogen zusammenfließen, die zugehörigen Listen- und Speichereinträge zu einem gemeinsamen Eintrag zusammengefaßt werden und daß die betreffenden zuvor bewegten Speicher und Kopflisten bereinigt werden,was auch dann der Fall ist,wenn ein fertiger Bogen dem Weiterverarbeitungsprozeß übergeben wird.
Das erfindungsgemäße Verfahren wird im folgenden anhand mehrerer Figuren erläutert.

Fig. 1 zeigt eine schematische Darstellung, die ein Abtastsystem bestehend aus einer Druckvorlage 1, einem Abtaster 2, der vorzugsweise als Videokamera ausgeführt ist, eine Schwellenschaltung 3, einem zweizeiligen Bildspeicher 4, einem sog. Ereignis-Rechner 5, der Listen L1, L2 beliefert, verschiedene Programmbausteine wie TYP, RND, ONR, PMD 45°; PMD 135°; PMV 180° und weitere Programmbausteine wie 6, 7 9 bis 12 und einen Pufferspeicher 8 sowie einen Bogenspeicher 13 enthält.

Fig. 2 zeigt eine schematische Darstellung eines in einer Abtastvorlage enthaltenen Drucksymbols, bei dem eingetragene Tangenten mit einer Normale von 45° und die dazugehörigen Diskriptoren eingetragen sind.

Fig. 3 zeigt schematisch einen willkürlich gewählten Umfang einer Symbolfläche zur Verdeutlichung von verschiedenen Diskriptorpositionen T1 bis T4, B1 bis B4 und S4 entlang eines konvexen Bogens, der ausgezogen gezeichnet ist, und entlang eines konkaven Bogens, der gestrichelt gezeichnet ist.

Fig. 4 zeigt schematisch je einen konvexen und einen konkaven Deskriptorzyklus und die zugehörigen Zyklusrichtungen.

Fig. 5 zeigt mehrere Bildpunktmuster für ein Textsymbol aus einer Abtastvorlage, und zwar mit verschiedenen Drehlagen und verschiedenen Größen, mit eingetragenen Deskriptorsymbolen.
Fig. 6 zeigt die durch den Verarbeitungsprozeß entstandenen Bogenstrukturen.

Fig. 7 zeigt eine schematische Übersicht über die möglichen Grundmustertypen 1 bis 14 in zwei aufeinanderfolgenden Abtastzeilen.

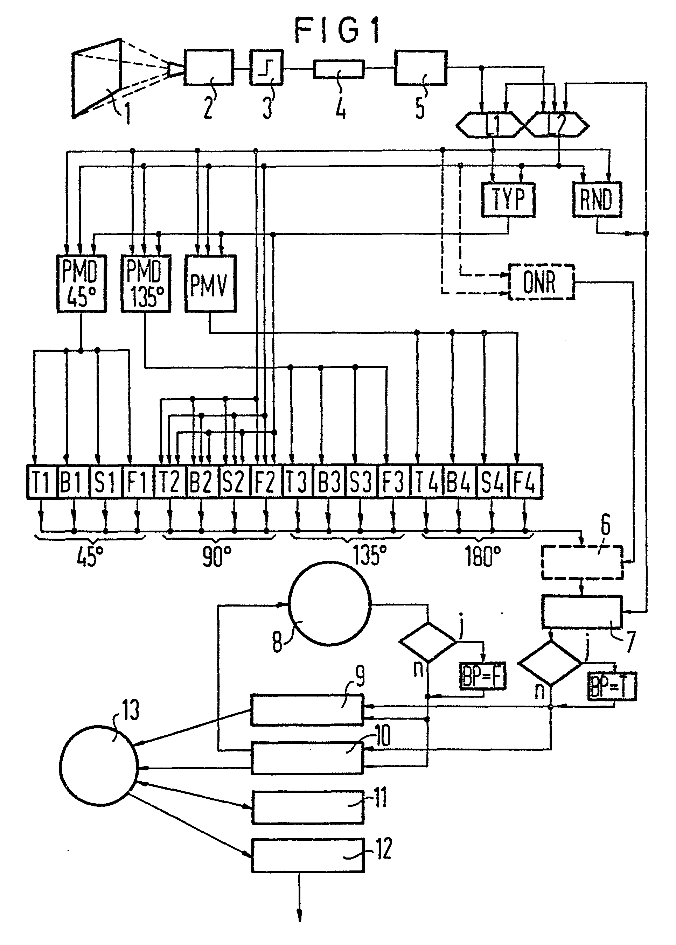

Wie bereits erläutert, zeigt Fig. 1 ein Abtastsystem gemäß der vorliegenden Erfindung. Eine Abtasteinrichtung 2 wird in an sich bekannter Weise über eine Druckvorlage 1 geführt. Die dabei entstehenden analogen Bildsignale werden in einer Schwellenanordnung 3 in ebenfalls an sich bekannter Weise digitalisiert und dann einem zweizeiligen Bildspeicher eingegeben. Ein dem zweizeiligen Bildspeicher 4 nachgeordneter Ereignis-Rechner 5 nimmt die gespeicherten Bilddaten auf und arbeitet sie mit Listen L1 und L2 ab. Dabei wird erfindungsgemäß das als digitale Information vorliegende Abbild der Druckvorlage 1 unter verschiedenen Projektionsrichtungen analysiert, wozu die Programmbausteine PMD 45$^{o}$, PMD 135$^{o}$ und PMV       dazu dienen,  die              . Projektion

unter dem angegebenen Winkeln zu erstellen    . Als
                                              in den Modulen T1-F4
Ergebnis dieser Verarbeitungsvorgänge entstehen Deskriptoren TBSF für die Gruppe "Oberkante", "Unterkante", "Sattel" und "Verzweigung" jeweils für die Abtastrichtungen 45$^{o}$, 90$^{o}$, 135$^{o}$ und 180$^{o}$. Dazu dient, wie Fig. 1 zu entnehmen ist, neben den Listen L1, L2 auch ein Programmbaustein TYP. Weitere Programmbausteine RND und ONR veranlassen jeweils einen Prozeß "Zuweisung Fläche" in einem weiteren Programmbaustein 6 bzw. "Zuweisung Rand" in einem anderen Programmbaustein 7. In diesen Prozessen werden den erhaltenen        . Deskriptoren T1...F1, T2...F2, T3...F3 sowie T4...F4 die jeweiligen Flächennummern bzw. Randnummern zugewiesen.

5a-    VPA **82** P 1 9 3 0 E

Aus dem Programmbaustein 7 für den Prozess "Zuweisung Rand" werden die Deskriptoren einer Entscheidung mit der Frage "Neue Zeile" unterworfen. Diese Frage wird mit nein beantwortet, wenn der Deskriptor in der gleichen Bildzeile errechnet wurde wie sein Vorgänger. Ist dies der Fall, so wird der Deskriptor direkt über die Bausteine 9 und 10 in den Bogenspeicher 13 eingetragen. Ist ein Eintrag nicht möglich, erfolgt eine Zwischenspeicherung im Puffer 8. Obige Frage wird mit ja beantwortet, wenn der anstehende Deskriptor und sein Vorgänger in unterschiedlichen Bildzeilen errechnet wurden. In diesem Fall wird ein Pufferflag BP auf TRUE gesetzt. Dieses bewirkt, daß die Programmbausteine 9 und 10 vor der Bearbeitung des neuen Deskriptors die im Puffer 8 gespeicherten Deskriptoren abarbeiten und in 13 eintragen. Ist der Puffer 8 leer wird das Pufferflag BP auf FALSE gesetzt und der anstehende Deskriptor wird vor 9 und 10 bearbeitet.

Der Programmbaustein 9 bewirkt, daß der erste Deskriptor eines neu gefundenen Bogens einen Neueintrag in den Kopflisten eines Bogenspeichers 13 veranlasst. Im übrigen wird jeder Diskriptor entsprechend seiner ihm zugeordneten Randnummer dem zugehörigen Bogen zugeordnet und über den Programmbaustein 10 ("Eintragen") dem Bogenspeicher 13 mitgeteilt, bzw. im Puffer 8 zwischengespeichert.

Jeweils dann wenn mehrere Bogenfragmente zu einem Bogen zusammenfließen, werden die zugehörigen Listen und Speichereinträge zu einem einzigen Eintrag zusammengefaßt. Dies geschieht in dem Programmbaustein 11 ("Zusammenfassung"). Parallel zu diesem Vorgang werden die dabei betroffenen Speicher und Kopflisten bereinigt.

Wenn ein Bogen vollständig durch seine Deskriptoren beschrieben worden ist, so wird die diesen Bogen betreffende Information dem Bogenspeicher 13 entnommen und einem weiteren Verarbeitungsprozeß, beispielsweise einem Schriftzeichen-Erkennungsprozeß, zugeführt. Dies geschieht in dem letzten Programmbaustein 12 ("Auslagern"). Daneben werden die betroffenen Kopflisten entsprechend bereinigt.

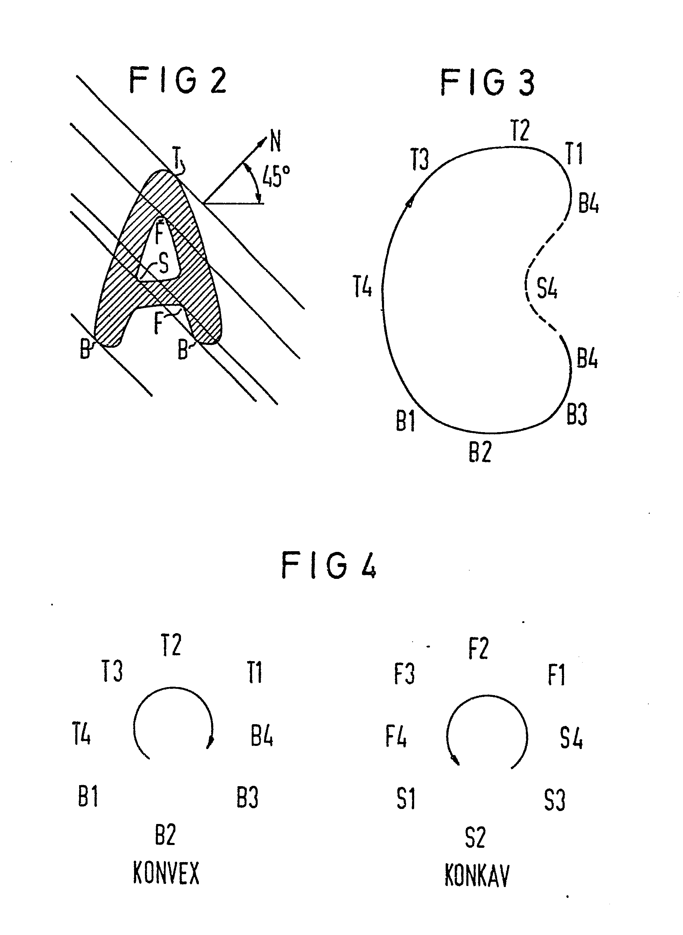

Fig. 2 zeigt, wie bereits erläutert, eine schematische Darstellung eines Textsymbols, das von Tangenten berührt wird, die senkrecht auf einer Normalen von 45° stehen, wobei die sich ergebenden zugehörigen Deskriptoren, nämlich T, F, S, B für "Oberkante", "Verzweigung", "Sattelpunkt" und "Unterkante" an den Tangentenberührungspunkten eingetragen sind.

Fig. 3 zeigt, wie bereits erläutert, schematisch einen willkürlich festgelegten Umfang eines Symbols in der abzutastenden Vorlage mit eingetragenen Deskriptoren, die entlang der Außenlinie der gezeigten Fläche angeordnet sind. Der durchgezogene Teil der Umfangslinie stellt dabei, wie ersichtlich, einen konvexen Bogen, der unterbrochen gezeichnete Teil einen konkaven Bogen dar.

Fig. 4 zeigt, wie bereits erläutert, schematische Darstellungen jeweils eines konvexen und eines konkaven Deskriptionszyklus mit angegebenen Diskriptoren sowie mit den zugehörigen Zyklusrichtungen für konvexe bzw. konkave Bögen.

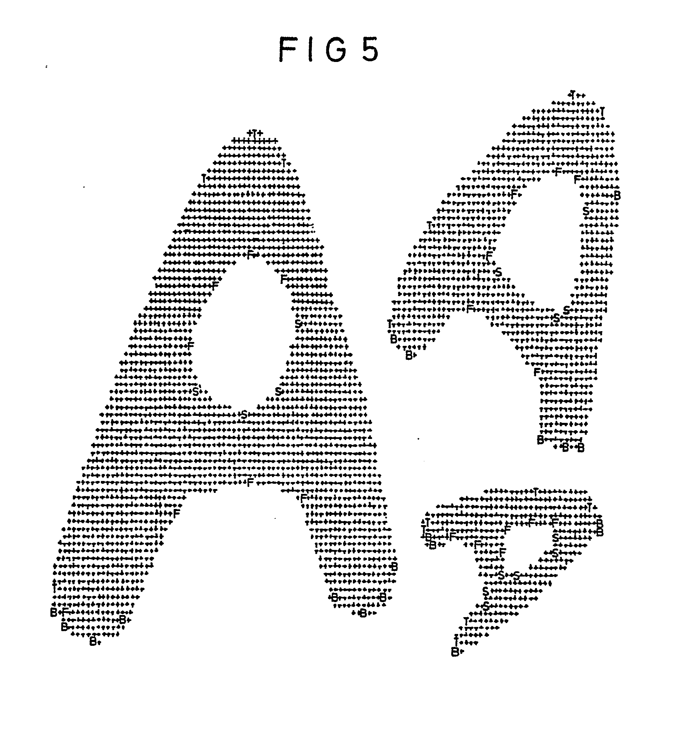

Fig. 5 zeigt ein aus einer Vielzahl von Bildpunkten bestehendes Textsymbol in unterschiedlichen Drehlagen und/oder Größen mit den eingetragenen Deskriptorsymbolen. Es ist aus dieser Figur ersichtlich, daß sich die Verteilung der Deskriptoren entsprechend der Aufgabe der Erfindung trotz unterschiedlicher Drehlagen und trotz unterschiedlicher Größen nicht verändert.
*

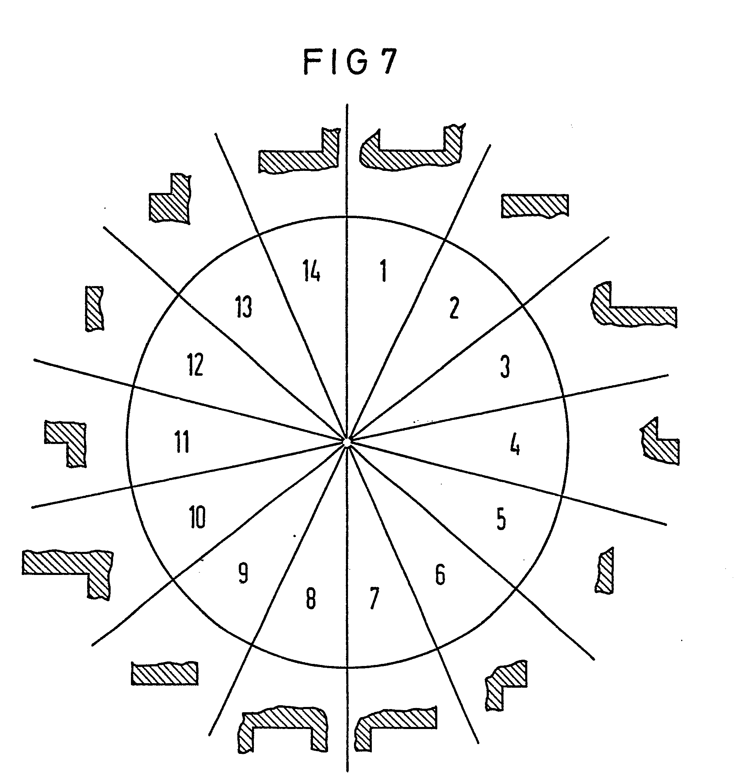

Fig. 7 zeigt schließlich eine Übersicht über die möglichen Grundmustertypen in zwei aufeinanderfolgenden Abtastzeilen.

5 Patentansprüche
7 Figuren


*

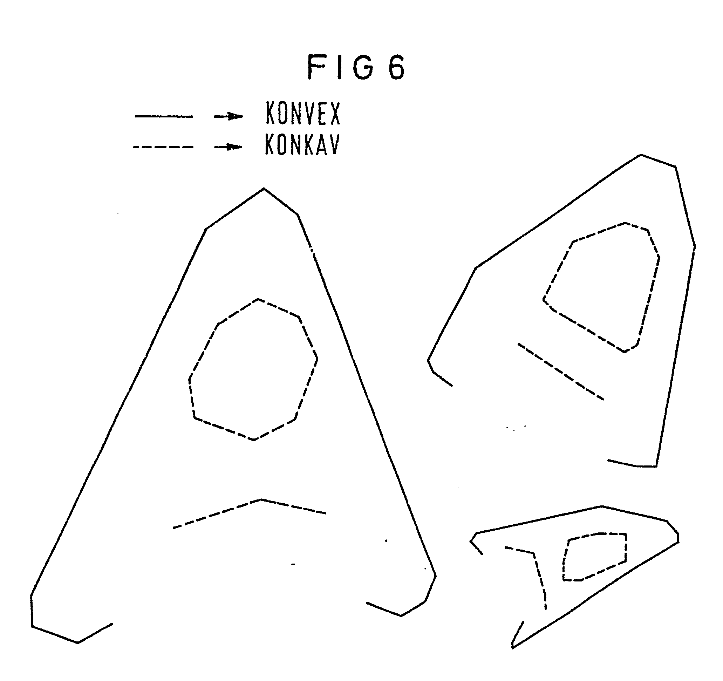

Fig. 6 zeigt das Ergebnis der Zusammenfassung der Deskriptoren aus Fig. 5 zu konkaven und konvexen Bögen. Diese Figur zeigt, daß die entstandenen Datenstrukturen unabhängig von Größe und Drehlage sind.

-8-

1. Verfahren zur Darstellung von Druckvorlagen in Form von
größen- und drehlagenunabhängigen Bogenstrukturen zum
Zwecke einer Dokumentenanalyse, insbesondere zur Schriftzeichenerkennung, wobei das Dokument außer Textbereichen auch
Graphik- und/oder Bildbereiche enthalten kann, bei dem die
Vorlage optoelektronisch, vorzugsweise mittels einer Videokamera, Abtastzeile für Abtastzeile abgetastet wird, wonach
die in analoger Form entstehenden, die optoelektronische
Abbildung der Vorlage repräsentierenden Signale mittels
eines Entscheidungsvorgangs jeweils entweder einer einen
"Weißwert" repräsentierenden Binärzahl, vorzugsweise "1",
oder einer einen "Schwarzwert" repräsentierenden Binärzahl,
vorzugsweise "0", zugeordnet werden  und wonach die Ergebnisse einer derartigen Schwellwertentscheidung jeweils für
zwei aufeinanderfolgende Abtastzeilen zu ihrer Verarbeitung
zwischengespeichert werden, dadurch  g e k e n n -
z e i c h n e t , daß jeweils die Daten einer aktuellen und
der unmittelbar vorhergehenden Abtastzeile zwischengespeichert werden, daß beim Abtasten einer neuen Zeile ein Vorwärtsrollen für die beiden jeweils zwischengespeicherten
Abtastzeilen vorgenommen wird, daß aus dem zwischengespeicherten "zweizeiligen Bildsignal" Mustergrundtypen nach
ihrer Art und nach ihrer Lage bestimmt werden, daß den bestimmten Bedeutungen wie "Oberkante","Unterkante",
"Sattel", "Verzweigung" und "Flanke", zugeordnet werden,
daß diese Bedeutungen codiert und entsprechend ihrer Lage
in einen eindimensionalen Vektor, der genau die Länge einer
Bildzeile hat, projiziert werden, wobei die Projektion aus
der Richtung der Vertikalen auf die Bildhorizontale, nämlich der Ebene der momentan abgetasteten Bildzeile, erfolgt, wobei aus dieser Projektion die Bedeutungen bereits
abgetasteter Mustergrundtypen sowie deren Lage in Richtung
der X-Koordinate erkennbar sind, daß die jeweils zugehörigen Y-Koordinaten in einer Zusatzzeile gespeichert werden,
daß eine Projektion aus der Richtung einer Bilddiagonalen erfolgt, wonach wiederum den Mustergrundtypen mit Hilfe zumindest einer bereits bestehenden Projektion Bedeutungen zugeordnet werden, wozu diese Bedeutungen ebenfalls codiert und entsprechend ihrer Lage in einen eindimensionalen Vektor projiziert werden, dessen Länge wiederum der Bildzeile entspricht, wobei aus dieser Projektion die Bedeutungen bereits abgetasteter Mustergrundtypen sowie deren Lage in X-Richtung entsprechend der Diagonalprojektion erkennbar sind und wobei die jeweils zugehörigen Y-Koordinaten sowie die momentane Projektionslänge einer Codierungsart in einer Zusatzzeile abgespeichert sind, daß aus den Mustergrundtypen, den Vertikal- und Diagonalprojektionen tangentiale Punkte oder "Deskriptoren" ermittelt werden, die als Stützwerte die Musterränder beschreiben, nämlich an den Stellen, an denen Tangenten mit Normalen in $45^0$-, $90^0$-, $135^0$- und $180^0$-Richtung angelegt werden können, daß den Deskriptoren, um deren jeweilige Zugehörigkeit zu einer Fläche darzustellen, eine Flächennummer des jeweiligen Objekts zugewiesen wird, daß den Deskriptoren zusätzlich eine dem linken bzw. dem rechten Rand einer Fläche, welche Ränder mit fortlaufenden Nummern gekennzeichnet werden, entsprechende Randnummer zugewiesen wird, daß die Deskriptoren mit Hilfe der Randnummern zu konkaven bzw. konvexen Bögen zusammengefaßt werden und daß die zu einem jeweils vollständig durch seine Deskriptoren beschriebenen Bogen gehörende Information dem Speicher entnommen und einem weiteren, abschließenden Verarbeitungsprozeß zugeführt wird.

2. Verfahren nach Anspruch 1, dadurch g e k e n n z e i c h n e t , daß 16 Deskriptorarten extrahiert werden.

3. Verfahren nach Anspruch 1, dadurch g e k e n n - z e i c h n e t , daß der jeweils erste Deskriptor eines neuen Bogens einen Neueintrag in zumindest eine von Kopflisten in einem Bogenspeicher bewirkt.

4. Verfahren nach Anspruch 1, dadurch g e k e n n -

0107789

VPA 82 P 1930 E

zeichnet, daß jeder Deskriptor entsprechend der ihm zugeordneten Randnummer dem zugehörigen Bogen zugeordnet und entsprechend abgespeichert wird.

5. Verfahren nach Anspruch 1, dadurch gekenn - zeichnet, daß für den Fall, daß mehrere Bogenfragmente zu einem Bogen zusammenfließen, die zugehörigen Listen- und Speichereinträge zu einem gemeinsamen Eintrag zusammengefaßt werden und daß die betreffenden zuvor belegten Speicher und Kopflisten bereinigt werden.

1/5

FIG 1

FIG 2

FIG 3

FIG 4

KONVEX

KONKAV

FIG 5

0107789

## FIG 6

——— ➔ KONVEX

----- ➔ KONKAV

FIG 7